# EUROPEAN PATENT APPLICATION

(11) **EP 4 576 393 A1**
(43) Date of publication of application: **25.06.2025**
(21) Application number: 24215061.3
(22) Date of filing: 25.11.2024
(51) Int. Cl.: H01M 50/469, H01M 50/536, H01M 50/538, H01M 50/559, H01M 50/566

(54) **CURRENT COLLECTION PLATE AND BATTERY CELL**

(30) Priority: 18.12.2023 CN 202323461294 U; 26.07.2024 WO PCT/CN2024/107791
(71) Applicant: Eve Energy Co., Ltd., Huizhou, Guangdong 516006 (CN)
(72) Inventor: LI, Jidong, Huizhou, Guangdong 516006 (CN); FU, Zhibo, Huizhou, Guangdong 516006 (CN); WANG, Xingjian, Huizhou, Guangdong 516006 (CN); SONG, Pengyuan, Huizhou, Guangdong 516006 (CN)
(74) Representative: Berggren Oy

(57) **Abstract**

The present disclosure provides a current collection plate and a battery cell. the battery cell includes the current collection plate, and the current collection plate includes a welding side and a back side arranged oppositely. The welding side is configured to be welded to a battery core (3), the back side is provided with a welding track (2), and the welding track (2) presents a smooth wavy curve.

## Description

### TECHNICAL FIELD

The present disclosure relates to the technical field of battery production and processing, and in particular, to a current collection plate and a battery cell.

### BACKGROUND

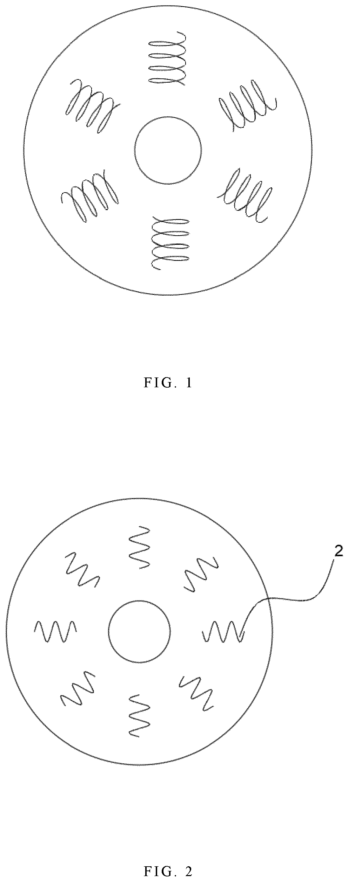

Cylindrical battery cells generally use laser welding to weld a current collection plate and a battery core of one battery cell together to ensure connection strength and a current flowing area of a pole and and a connecting piece. In related arts, a laser welding track between the current collection plate and the battery core of the battery cell may be a broken line welding track. The broken line welding track requires a speed of a laser beam near an inflection point to be first reduced to zero and then increased from zero to accelerate, so the laser energy will accumulate a large amount at the inflection point, resulting in a large welding depth and the risk of welding through. Alternatively, the laser welding track between the current collection plate and the battery core of the battery cell may also be a spiral curve track (see FIG. 1). This curve track has multiple overlapping welding points, and it is easy to cause over-welding at the overlapping welding points, resulting in structural weld penetration. The above-mentioned problems lead to poor welding quality of the battery cell in the related arts.

### SUMMARY

In view of this, the present disclosure provides a current collection plate and a battery cell to improve problems such as over-welding caused by welding energy concentration under the premise of ensuring the welding strength and the current flowing area during a welding process of the current collection plate and the battery core of the battery cell, and the welding energy concentration is caused by the inflection points and overlapping joints in the existing welding track.

In a first aspect, embodiments of the present disclosure provide a current collection plate, including a welding side and a back side arranged oppositely. The welding side is configured to be welded to a battery core, the back side is provided with a welding track, and the welding track presents a smooth wavy curve.

In a second aspect, embodiments of the present disclosure provide a battery cell, including a battery core and any one of the current collection plates described above. The welding side of the current collection plate is welded to a battery tab of the battery core, and an orthographic projection of the welding track of the current collection plate on the welding side overlaps the battery tab.

Beneficial effects of the embodiments of the present disclosure:

The present disclosure provides the current collection plate and the battery cell. In the embodiments of the present disclosure, by designing the welding track to a smooth wavy curve with no intersections and no overlapping points, it can make it difficult for the welding track to exist inflection points, so that the welding energy at the inflection point will not be too large to breakdown the current collection plate. Moreover, there will be no situation in which spiral welding is used in the related arts to cause multiple overlapping points on the current collection plate, resulting in excessive welding energy at the overlapping points on the current collection plate. A plurality of welding tracks are evenly arranged on the current collection plate, making the connection between the current collection plate and the battery core stronger and the current flowing area larger while avoiding over-welding, thereby improving the welding quality.

### BRIEF DESCRIPTION OF THE DRAWINGS

In order to more clearly illustrate the technical solutions of the embodiments of the present disclosure, the drawings of the embodiments will be briefly introduced below. Obviously, the drawings in the following description only relate to some embodiments of the present disclosure and do not limit the present disclosure.
FIG. 1 is a schematic structural diagram of a current collection plate in the related art.
FIG. 2 is a schematic structural diagram of a negative current collection plate provided by embodiments of the present disclosure.
FIG. 3 is a schematic structural diagram of a positive current collection plate provided by embodiments of the present disclosure.
FIG. 4 is another structural schematic diagram of the negative current collection plate provided by embodiments of the present disclosure.
FIG. 5 is another structural schematic diagram of the positive current collection plate provided by embodiments of the present disclosure.
FIG. 6 is a third structural schematic diagram of the negative current collection plate provided by embodiments of the present disclosure.
FIG. 7 is a cross-sectional structural view of a battery cell provided by embodiments of the present disclosure.
FIG. 8 is a schematic structural diagram of an electrode tab provided by embodiments of the present disclosure.

### References symbols:

11, current collection plate body; 12, leading tab; 2, welding track; 21, semicircular portion; 22, linear portion; 3, battery core; 31, section; A, first portion; B, second portion; C, third portion.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present disclosure, rather than all of the embodiments. Based on the embodiments in the present disclosure, all other embodiments obtained by those skilled in the art without creative efforts shall fall within the scope of protection of the present disclosure.

In the description of the present disclosure, it should be understood that the terms "first" and "second" are only used for descriptive purposes and cannot be understood as indicating or implying relative importance or indicating the number of indicated technical features. Therefore, the features defined as "first" and "second" may explicitly or implicitly include one or more features. In the description of the present disclosure, the term "plurality" means two or more than two, unless otherwise explicitly and specifically limited.

In the present disclosure, the term "exemplary" is used to mean "serving as an example, exemplifying, or illustrating". Any embodiment described herein as "exemplary" is not necessarily to be construed as preferred or advantageous over other embodiments. The following description is presented to enable any person skilled in the art to make and use the present disclosure. In the following description, details are set forth for the purpose of explanation. It will be understood that one of ordinary skill in the art will recognize that the present disclosure may be practiced without these specific details. In other instances, well-known structures and processes have not been described in detail to avoid obscuring the description of the present disclosure with unnecessary detail. Thus, the present disclosure is not intended to be limited to the embodiments shown but is to be accorded the widest scope consistent with the principles disclosed herein.

In the related arts, current collection plates of a battery cell include a positive current collection plate and a negative current collection plate. The positive current collection plate and a battery core need to be welded, and the negative current collection plate and the battery core also need to be welded. As a result, a plurality of battery cells are converged to form a battery pack for supplying energy to the powered equipment. The more uniform the welding between the current collection plate of the battery cell and the battery core, and the better the welding strength and current flowing capacity of multiple welding points between the current collection plate of the battery cell and the battery core, the better the welding effect.

A welding track used in a connection structure between the current collection plate of the battery cell and the battery core in the related art is generally broken line or spiral, so inflection points or overlapping points are easy to exist, resulting in over-welding between the current collection plate of the battery cell and the battery core.

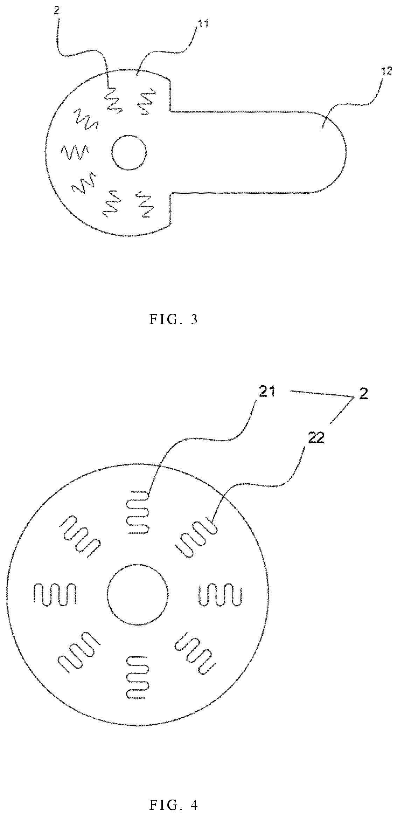

Based on the above current collection plates, please refer to FIG. 2 and FIG. 3, FIG. 2 is a schematic structural diagram of a negative current collection plate provided by embodiments of the present disclosure, and FIG. 3 is a schematic structural diagram of a positive current collection plate provided by embodiments of the present disclosure. The present disclosure provides a current collection plate having a welding side and a back side arranged oppositely. The welding side is configured to be welded to a battery core 3. The back side is provided with welding tracks 2, and the welding track 2 presents a smooth wavy curve.

It can be understood that the smooth wavy curve may be any curve with no inflection points and no overlapping points (no intersection). For example, the smooth wavy curve may be a sinusoidal curve, or may be a curve without inflection points composed of straight lines and curves, or may even be a random curve.

In the related arts, some welding tracks may be broken lines having a plurality of inflection points. Therefore, during the welding process, the laser beam needs to accelerate on the straight line and then at a constant speed, the laser beam needs to decelerate when approaching the inflection point until, and a speed of the laser beam is reduced to zero when reaching the inflection point and then increased from zero. Therefore, the laser energy will accumulate a large amount at the inflection point, resulting in a large welding depth and the risk of welding through. When the welding track is designed as spiral, although the welding track no longer has the inflection points, there are a plurality of overlapping points. The presence of the overlapping points in the welding track means that the welding energy there is too high, and over-welding is prone to occur there. The two conditions exist in different degrees of over-welding, affecting the welding effect.

Beneficial effects of the present disclosure: by designing the welding track 2 to a smooth wavy curve (the wavy curve may be a smooth curve or a non-smooth curve, the non-smooth wavy curve may also have an inflection point) without overlapping points, it can make it difficult for the welding track 2 to exist inflection points, so that the welding energy at the inflection point will not be too large to breakdown the current collection plate. Moreover, there will be no situation in which spiral welding is used in the related arts to cause multiple overlapping points on the current collection plate, resulting in excessive welding energy at the overlapping points on the current collection plate. The plurality of welding tracks 2 are evenly arranged on the current collection plate, making the connection between the current collection plate and the battery core 3 stronger and the current flowing area larger while avoiding over-welding, thereby improving the welding quality.

The current collection plate in the embodiments is suitable for steel-cased cylindrical battery cells, and of course may also be applied in the battery cells of other shapes (such as square).

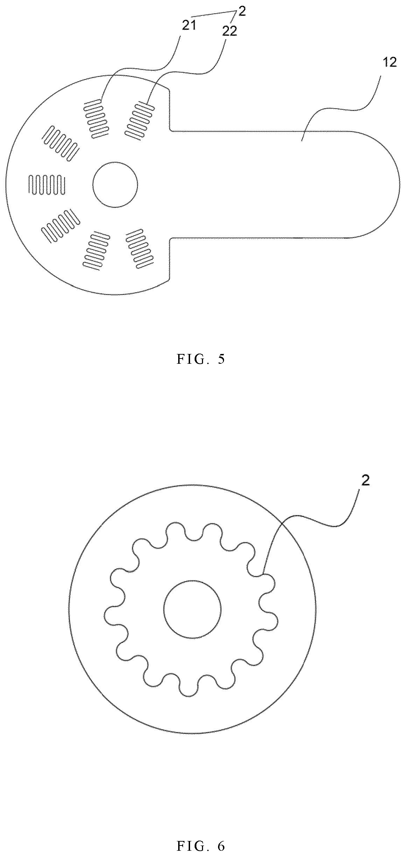

In some embodiments of the present disclosure, referring to FIG. 4 and FIG. 5, FIG. 4 is another structural schematic diagram of the negative current collection plate provided by embodiments of the present disclosure, and FIG. 5 is another structural schematic diagram of the positive current collection plate provided by embodiments of the present disclosure. The welding track 2 includes a plurality of semicircular portions 21 and a plurality of linear portions 22. The plurality of semicircular portions 21 and the plurality of linear portions 22 are alternately arranged and connected in sequence.

The alternative arrangement means that the linear portion 22 and the semicircular portion 21 are connected end to end. One end of one linear portion 22 is connected to one end of one semicircular portion 21, and the other end of the linear portion 22 is connected to one end of another semicircular portion 21.

It should be understood that the semicircular portion 21 is not limited to a semicircular curve, but may also be a part of an elliptic curve. The linear portion 22 may be a straight line or a curve with a certain arc. The semicircular portion 21 and the linear portion 22 need to be tangent, so it is satisfied that the overall welding track is a smooth (no inflection point) curve. The curve may be regarded as a wavy curve in a broad sense, but the wavy curve is not limited to the curve composed of the linear portions 22 and the semicircular portions 21.

It can be understood that the plurality of semicircular portions 21 and the plurality of linear portions 22 are alternately arranged and connected in sequence to form the wavy curve track. This track has no overlapping points and inflection points, and is an optimized structure of the above-mentioned ordinary wavy arc.

The embodiments of the present disclosure convert the wavy curve into semicircular portions 21 and linear portions 22, and alternately arrange and connect the semicircular portions 21 and the linear portions 22, so that a width (that is, along a length direction of the linear portion 22 in the wavy curve, further that is a length along a circumferential direction of the current collection plate) of the welding track 2 is wider, and the welding track 2 has a larger surface area on the current collection plate, thereby making a welding contact surface larger and more uniform. In this way, connection strength between the current collection plate and the battery core 3 is higher, and at the same time, the current flowing area between the current collection plate and the battery core 3 is larger, in turn making an overall effective current flowing area of the battery cell larger. Thus, there is no need to consider the need for additional filler welding in a blank space.

In some embodiments of the present disclosure, as illustrated in FIG. 4 and FIG. 5, the plurality of linear portions 22 are arranged in parallel and spaced apart in sequence.

It can be understood that the fact that the plurality of linear portions 22 are arranged in parallel and spaced apart does not necessarily mean that a length of each linear portion 22 is the same. The lengths of the plurality of linear portions 22 in each welding track 2 may be different.

Furthermore, the linear portion 22 may also be a part (i.e., an arc) of a circle surrounding a center of the current collection plate, as long as the multiple arcs (i.e., the linear portions 22) are parallel to each other, a diameter of each semicircular portion 21 in the welding track can also be made consistent.

By arranging the linear portions 22 parallel to each other, the diameter of the semicircular portion 21 in the welding track 2 on a surface of the current collection plate can be maximized, so that during the welding process, the laser beam is easier to turn without decelerating or to turn smoothly with the lowest deceleration. Thus, the variance of the welding energy value at each place of the welding track 2 is minimized, and the welding energy is distributed more evenly throughout the welding track 2, thereby effectively preventing over-welding at the turnings of the welding track 2.

In some embodiments of the present disclosure, the welding track 2 extends along a radial direction of the current collection plate.

It can be understood that the welding track 2 extending along the radial direction of the current collection plate may be that the welding track 2 is connected along a diameter direction of the current collection plate, or may be that the welding track 2 is offset at a certain angle relative to the diameter direction of the current collection plate, so that one end of the welding track 2 faces the center of the current collection plate, the other end of the welding track 2 faces an edge of the current collection plate.

By extending the plurality of welding tracks 2 along the radial directions of the current collection plate, a number of connecting layers of tabs (more details below) on the battery core 3 connected to the current collection plate can be increased, so that the connection strength between the current collection plate and the battery core 3 after welding is improved and at the same time the current flowing area between the current collection plate and the battery core 3 is larger, so that the overall current flowing effect of the battery cell is better.

In some embodiments of the present disclosure, there are multiple welding tracks 2, and the welding tracks 2 are arranged sequentially around the center of the current collection plate.

A number of the welding tracks 2 distributed in a circumferential array around the current collection plate is sufficient as long as it can meet the welding strength and the current flowing area between the current collection plate and the battery core 3. Generally, the number of the welding tracks 2 may be set to eight. The number of more than eight will reduce the welding efficiency, and the number of less than eight will easily lead to a reduction in welding strength. The reason why there are multiple welding tracks 2 is to reduce the welding time between the current collection plate and the battery core 3 in the battery cell.

It should be understood that the circumferential array distribution of the welding tracks 2 around the current collection plate requires that a distance between adjacent welding tracks 2 be consistent, ensuring higher overall welding strength and larger overall current flowing area between the current collection plate and the battery core 3.

By distributing the welding tracks 2 in the circumferential array around the current collection plate, the welding time between the current collection plate and the battery core 3 can be greatly reduced while ensuring the enough welding strength and large enough current flowing area between the battery core and the current collection plate, thereby improving the efficiency of the entire welding process, and thus improving the efficiency of a preparation process of the entire battery cell.

In some embodiments of the present disclosure, the current collection plate may be a positive current collection plate or a negative current collection plate, which is not limited in the embodiments of the present disclosure. In some embodiments, the current collection plate may be a positive current collection plate. The positive current collection plate includes a circular current collection plate body 11 and a leading tab 12 extending from the current collection plate body 11.

It should be noted that shapes of the positive current collection plate and the negative current collection plate may be different. The positive current collection plate includes the current collection plate body 11 and the leading tab 12, but the welding tracks on both the positive current collection plate and the negative current collection plate need to meet the requirement of no inflection points and no overlapping points.

In some embodiments of the present disclosure, referring to FIG. 6, FIG. 6 is a third structural schematic diagram of the negative current collection plate provided by embodiments of the present disclosure. The welding track 2 presents an annular closed wavy curve arranged around the center of the current collection plate.

The welding track 2 may also be an annular closed welding track 2 surrounding the center of the current collection plate, also avoiding inflection points and overlapping points in the welding track 2, so that over-welding caused by the excessive welding energy at the inflection points and overlapping points in the welding track 2 is avoided, thereby avoiding damage to the welding strength between the battery core 3 and the current collection plate and preventing the current flowing area between the battery core 3 and the current collection plate from be reduced. It should be noted that this is only an example of another embodiment in which the curve has no inflection points and no overlapping points.

In some embodiments, the current collection plate is a copper sheet. A material of the current collection plate may also be a copper sheet with a plating layer, and the plating layer may be a chemical plating layer.

In some embodiments of the present disclosure, by setting the material of the current collection plate to the copper sheet, an internal resistance of the current collection plate is relatively reduced and heating during an operation of the current collection plate is reduced, thereby reducing flowing current loss between the current collection plate and the battery core, and improving the overall conductive performance of the battery cell.

A thickness of the current collection plate can be determined according to actual needs, and is not limited in the embodiments of the present disclosure. In some embodiments of the present disclosure, the thickness of the current collection plate ranges from 0.1 mm to 0.5 mm, and may further range from 0.15 mm to 0.25 mm, such as 0.15 mm, 0.20 mm, 0.25 mm, etc.

In some embodiments of the present disclosure, by setting the thickness of the current collection plate ranging from 0.1 mm to 0.5 mm, it can be ensured that the current collection plate or the battery core 3 will not be welded through during the welding process.

In some embodiments of the present disclosure, the welding track 2 is a laser welding track, so that the laser beam can laser weld the current collection plate and the battery core 3 along the welding track 2.

The embodiments of the present disclosure can achieve higher welding quality by using laser welding along the welding track.

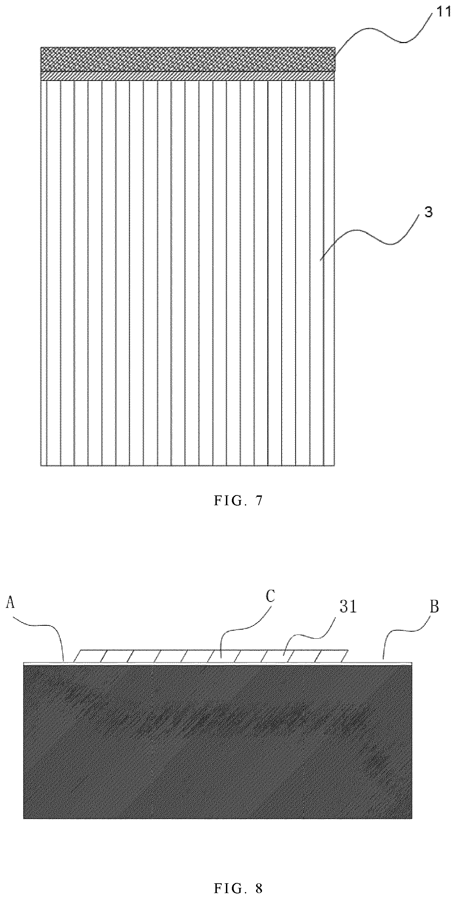

In a second aspect, the present disclosure provides a battery cell, as illustrated in FIG. 7, FIG. 7 is a cross-sectional structural view of a battery cell provided by embodiments of the present disclosure. The battery cell includes a battery core 3 and any of the above current collection plates. The welding side of the current collection plate is welded to a battery tab of the battery core 3, and an orthographic projection of the welding tracks 2 of the current collection plate on the welding side overlaps the battery tab. Since the battery cell is provided with the current collection plate in the above embodiments, the battery cell can have all the beneficial effects of the current collection plate in any of the above embodiments. That is, the welding tracks between the current collection plate and the battery core 3 of the battery cell have no overlapping points and no inflection points, so that the welding energy at the inflection point will not be too large to breakdown the current collection plate. Moreover, there will be no situation in which spiral welding is used in the related arts to cause multiple overlapping points on the current collection plate, resulting in excessive welding energy at the overlapping points on the current collection plate. The plurality of welding tracks 2 are evenly arranged on the current collection plate, making the connection between the current collection plate and the battery core 3 stronger and the current flowing area larger while avoiding over-welding, thereby improving the welding quality.

In some embodiments, referring to FIG. 8, FIG. 8 is a schematic structural diagram of an electrode tab provided by embodiments of the present disclosure. The battery core 3 includes a core portion and an outer circumference surface, and the core portion and the outer circumference surface are formed by winding a first electrode, a second electrode, and a separator sandwiched therebetween around a winding axis as a center.

The first electrode includes an active material-coated part and an uncoated part along a winding direction. At least a part of the uncoated part serves as the electrode tab. The uncoated part includes a first portion A adjacent to the core portion of the battery core 3, a second portion B adjacent to the outer circumference surface of the battery core 3, and a third portion C between the first portion A and the second portion B. Along a winding axis direction (i.e. an extension direction of the winding axis), any one or both of the first portion A and the second portion B is relatively lower than the third portion C.

The third portion C is divided into a plurality of sections 31, and each of the plurality of sections 31 can be bent individually to form a tab. The plurality of sections 31 are bent along radial directions of the battery core 3 to form a bending surface area, and the tabs formed by the sections 31 after bending make up the aforementioned battery tab, that is, the bending surface area serves as the battery tab of the battery core 3. It can be understood that the first portion A and the second portion B may also be divided.

Along a direction from a core side to an outer circumference side (i.e. a direction from the core portion toward the outer circumference surface), the bending surface area includes a stack number uniform area and a stack number decreasing area. A number of stacked layers of the sections 31 after bending (i.e. tabs) is uniform in the stack number uniform area, and the stack number decreasing area is located on an outer side of the stack number uniform area. The number of stacked layers of the sections 31 after bending (i.e. tabs) in the stack number decreasing area decreases as approaching the outer circumference side.

It can be understood that the second electrode also includes an active material-coated part and an uncoated part along the winding direction. At least a part of the uncoated part serves as an electrode tab. The uncoated part includes a first portion A adjacent to the core portion of the battery core 3, a second portion B adjacent to the outer circumference surface of the battery core 3, and a third portion C between the first portion A and the second portion B. Along the winding axis direction, any one or both of the first portion A and the second portion B is relatively lower than the third portion C.

The third part C is divided into a plurality of sections 31, and each of the plurality of sections 31 can be bent individually to form a tab. When the plurality of sections 31 are bent along the radial directions of the battery core 3, a bending surface area is formed, the tabs formed by the sections 31 after bending make up the aforementioned battery tab, that is, the bending surface area is the battery tab of the battery core 3. It can be understood that the first portion A and the second portion B may also be divided.

Along a direction from a core side to an outer circumference side (i.e. a direction from the core portion toward the outer circumference surface), the bending surface area includes a stack number uniform area and a stack number decreasing area. A number of stacked layers of the sections 31 after bending (i.e. tabs) is uniform in the stack number uniform area. The stack number decreasing area is located on an outer side of the stack number uniform area. The number of stacked layers of the sections 31 after bending (i.e. tabs) decreases as approaching the outer circumference side.

In some embodiments, the number of stacked layers of the sections 31 after bending (i.e. tabs) in the stack number uniform area is 10 or more.

It can be understood that an area where the number of stacked layers of the sections 31 after bending (i.e. tabs) reaches 10 or more may be set as a preferred welding target area.

In some embodiments, a projected area of the welding tracks 2 on the bending surface area is completely located within the stack number uniform area.

It can be understood that the stack number uniform area is an area with the largest number of stacked layers in the bending surface area, so that when the current collection plates are welded to the battery tabs of the battery core 3, the battery tabs of the battery core 3 will not be welded through.

In some embodiments, along a width direction of the welding track 2 (i.e. the circumferential direction of the current collection plate), the width of the welding track 2 is greater than a width of the section 31. In this way, it can be ensured that the welding track 2 are successfully welded to two adjacent tabs (i.e. sections 31 after bending) in the same ring layer.

In some embodiments, along the radial direction of the battery core, the welding track 2 is at least partially welded to two adjacent tabs (i.e. sections 31 after bending) in different ring layers. In this way, it can be ensured that the welding track 2 can be successfully welded to two adjacent tabs in different ring layers.

As illustrated in FIG. 7, the welding side of the current collection plate is welded to the battery tab of the battery core 3. A material of a positive battery tab of the battery core 3 is aluminum foil, and a material of a negative battery tab is copper foil.

The basic concepts have been described above. It is obvious to those skilled in the art that the above detailed disclosure is only an example and does not constitute a limitation on the present disclosure. Although not explicitly stated herein, those skilled in the art may make various modifications, improvements, and corrections to the present disclosure. Such modifications, improvements and corrections are suggested in the present disclosure, so such modifications, improvements and corrections still fall within the spirit and scope of the exemplary embodiments of the present disclosure.

Moreover, the present disclosure uses specific terms to describe the embodiments of the present disclosure. For example, "one embodiment", "an embodiment", and/or "some embodiments" means a certain feature, structure or characteristic related to at least one embodiment of the present disclosure. Therefore, it should be emphasized and noted that "one embodiment" or "an embodiment" or "an alternative embodiment" mentioned twice or more at different places in this specification does not necessarily refer to the same embodiment. In addition, certain features, structures or characteristics in one or more embodiments of the present disclosure may be appropriately combined.

Similarly, it should be noted that, in order to simplify presentation of the disclosure of the present disclosure and thereby facilitate understanding of one or more embodiments of the present disclosure, in the foregoing description of the embodiments of the present disclosure, multiple features are sometimes combined into one embodiment, accompanying drawings or descriptions thereof. However, this method of disclosure does not imply that the subject matter of the present disclosure requires more features than are mentioned in the claims. In fact, embodiments may have less than all features of one single disclosed embodiment.

For each of patents, patent applications, patent publications, and other materials, such as articles, books, instructions, publications, documents, etc., cited in the present disclosure, is hereby incorporated by reference into the present disclosure with its entirety. An exception is made for application history documents that are inconsistent with or in conflict with the present disclosure, and an exception is also made for documents (currently or later attached to the present disclosure) that limit the broadest scope of claims of the present disclosure. It should be noted that if there is any inconsistency or conflict between the descriptions, definitions, and/or the use of terms in the accompanying materials of the present disclosure and the content of the present disclosure, the description, definitions, and/or the use of terms in the present disclosure shall prevail.

## Claims

1. A current collection plate, **characterized in that** the current collection plate comprises a welding side and a back side arranged oppositely, the welding side is configured to be welded to a battery core (3), the back side is provided with a welding track (2), and the welding track (2) presents a smooth wavy curve.

2. The current collection plate according to claim 1, **characterized in that** the welding track (2) comprises a plurality of semicircular portions (21) and a plurality of linear portions (22), the plurality of semicircular portions (21) and the plurality of linear portions (22) are alternately arranged and connected in sequence.

3. The current collection plate according to claim 2, **characterized in that** the plurality of linear portions (22) are arranged in parallel and spaced apart in sequence.

4. The current collection plate according to claim 3, **characterized in that** each of the plurality of linear portions is an arc extending along a circumferential direction of the current collection plate; or
each of the plurality of linear portions is a straight line extending along a direction perpendicular to a radial direction of the current collection plate.

5. The current collection plate according to any one of claim 1 to claim 4, **characterized in that** the back side is provided with a plurality of welding tracks (2), and the plurality of welding tracks (2) are arranged sequentially around a center of the current collection plate.

6. The current collection plate according to claim 5, **characterized in that** each of the welding tracks (2) extends along a radial direction of the current collection plate.

7. The current collection plate according to any one of claim 1 to claim 6, **characterized in that** the current collection plate is a positive current collection plate, and the positive current collection plate comprises a current collection plate body (11) and a leading tab (12) extending from the current collection plate body (11).

8. The current collection plate according to any one of claim 1 to claim 3, **characterized in that** the welding track (2) presents an annular closed wavy curve arranged around a center of the current collection plate.

9. The current collection plate according to any one of claim 1 to claim 8, **characterized in that** a thickness of the current collection plate ranges from 0.1 mm to 0.5 mm.

10. A battery cell, **characterized in that** the battery cell comprises a battery core (3) and the current collection plate of any one of claim 1 to claim 9, the welding side of the current collection plate is welded to a battery tab of the battery core (3), and an orthographic projection of the welding track (2) of the current collection plate on the welding side overlaps the battery tab.

11. The battery cell according to claim 10, **characterized in that** the battery core (3) is formed by winding a first electrode, a second electrode, and a separator sandwiched therebetween around a winding axis as a center to comprise a core portion and an outer circumference surface, and the current collection plate is connected to any one of the first electrode and a second electrode;
the one of the first electrode and a second electrode connected to the current collection plate comprises an active material-coated part and an uncoated part along a winding direction, the uncoated part at least partially serves as an electrode tab, the uncoated part comprises a first portion (A) adjacent to the core portion of the battery core (3), a second portion (B) adjacent to the outer circumference surface of the battery core (3), and a third portion (C) between the first portion (A) and the second portion (B), and any one or both of the first portion (A) and the second portion (B) is lower than the third portion (C) along a winding axis direction;
the third portion (C) is divided into a plurality of sections (31) capability of being bent individually, the plurality of sections (31) are bent along radial directions of the battery core (3) to form a bending surface area, and the bending surface area serves as the battery tab of the battery core (3); and
along a direction from a core side to an outer circumference side, the bending surface area comprises a stack number uniform area and a stack number decreasing area, a number of stacked layers of the sections (31) is uniform in the stack number uniform area, the stack number decreasing area is located on an outer side of the stack number uniform area, and the number of stacked layers of the sections (31) in the stack number decreasing area decreases as approaching the outer circumference side.

12. The battery cell according to claim 11, **characterized in that** the number of stacked layers of the sections (31) in the stack number uniform area is 10 or more.

13. The battery cell according to any one of claim 11 to claim 12, **characterized in that** a projected area of the welding track (2) on the bending surface area is completely located within the stack number uniform area.

14. The battery cell according to any one of claim 11 to claim 13, **characterized in that** a width of the welding track (2) is greater than a width of the section (31).

15. The battery cell according to any one of claim 11 to claim 14, **characterized in that** along a radial direction of the battery core, the welding track (2) is at least partially welded to two adjacent sections (31) in different ring layers.
